(19) Europäisches Patentamt
European Patent Office
Office européen des brevets

(11) **EP 1 977 143 B1**

(12) **FASCICULE DE BREVET EUROPEEN**

(45) Date de publication et mention
de la délivrance du brevet:
**03.03.2010 Bulletin 2010/09**

(21) Numéro de dépôt: **07712643.1**

(22) Date de dépôt: **12.01.2007**

(51) Int Cl.:
***F16H 55/36*** *(2006.01)*

(86) Numéro de dépôt international:
**PCT/FR2007/000052**

(87) Numéro de publication internationale:
**WO 2007/085712 (02.08.2007 Gazette 2007/31)**

(54) **POULIE DE VILEBREQUIN**

KURBELWELLENSCHEIBE

CRANKSHAFT PULLEY

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **24.01.2006 FR 0600614**

(43) Date de publication de la demande:
**08.10.2008 Bulletin 2008/41**

(73) Titulaire: **Hutchinson**
**75008 Paris (FR)**

(72) Inventeurs:
• **ROINTRU, Claude**
**F-37230 Saint Etienne de Chigny (FR)**
• **KAMDEM, Henri**
**F-37400 Amboise (FR)**

(74) Mandataire: **Jacquard, Philippe Jean-Luc et al**
**Cabinet ORES**
**36, rue de St Pétersbourg**
**75008 Paris (FR)**

(56) Documents cités:
**EP-A- 1 619 410          WO-A-98/50709**
**WO-A-2004/070225     FR-A1- 2 754 856**

**Description**

La présente invention a pour objet une poulie de vilebrequin.

Dans un système de transmission par courroie d'un moteur automobile, la poulie de vilebrequin est la poulie motrice qui donne le mouvement moteur à la courroie, laquelle achemine ce mouvement moteur à un ou plusieurs organes récepteurs (accessoires tels qu'alternateur, pompe à eau, climatisation, et/ou direction assistée, etc...).

Les poulies de vilebrequin actuellement utilisées comportent un élément élastique constitué par une couronne en élastomère qui est adhérisée à une partie interne et à une partie externe pour assurer une liaison élastique permanente entre la partie interne et la partie externe.

Le document EP-A-1 619 410 constitue un document selon l'article 54(3) CBE.

Le document WO-A-2004/070225 montre le préambule de la revendication indépendante 1.

Etant donné que la poulie de vilebrequin entraîne tous les accessoires, et que le mouvement d'entraînement fourni par le moteur est par nature pseudo-sinusoïdal (en raison des instabilités de vitesse du moteur thermique), la fréquence du mouvement pseudo-sinusoïdal qui varie en même temps que le régime du moteur- elle est proportionnelle au nombre de cylindres et à la vitesse de rotation moyenne du vilebrequin - balaye une grande plage de fréquences et accroche donc toutes les fréquences de résonance du système de transmission.

La poulie de vilebrequin voit l'inertie globale équivalente I de l'ensemble de la cinématique entraînée (théorème de HUYGHENS), c'est-à-dire du ou des accessoires entraînés. Chaque organe entraîné contribue selon son rapport d'entraînement à l'inertie globale I vue par la poulie de vilbrequin. Il en est de même pour le couple résistant.

Il n'est pas possible d'augmenter la raideur de torsion k de l'élément élastique, sinon la poulie n'est pas efficace en découplage.

On choisit :

$$fc \leq f^* \qquad\qquad\qquad (1)$$

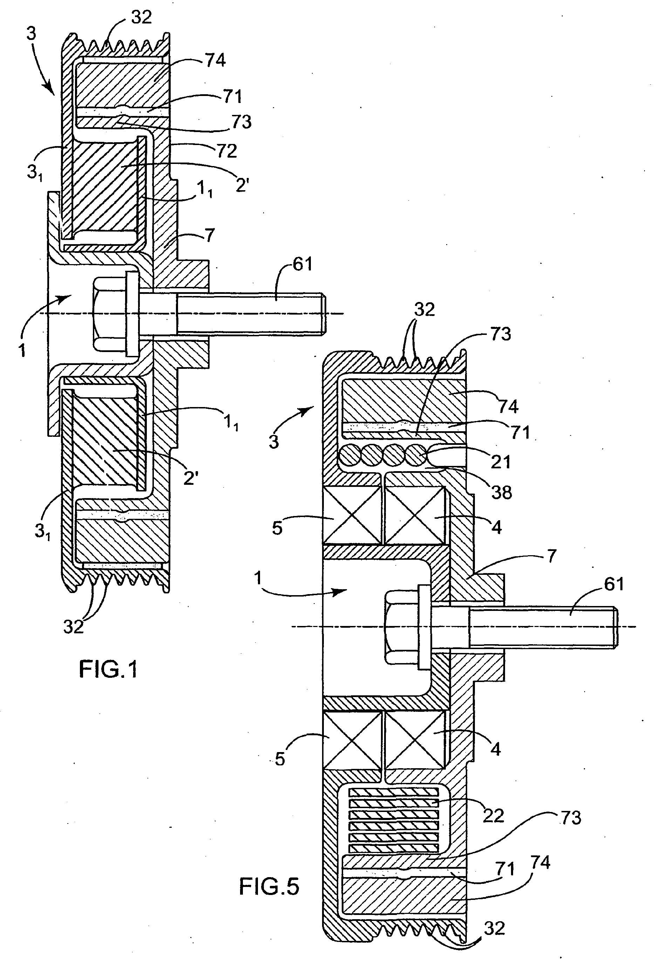

fc désignant la fréquence de coupure de la poulie de vilbrequin et f* désignant la fréquence critique du système à laquelle l'excitation générée par le moteur apporte de l'énergie en résonance (voir figure 1).

On a :

$$fc = \sqrt{2\, fr}$$

et

$$fr = \frac{1}{2\pi}\sqrt{\frac{k}{I}}$$

d'où :

$$k \leq 2\pi^2 (f^*)^2\, I \qquad\qquad\qquad (2)$$

Par exemple, dans les moteurs Diesel à 4 cylindres, l'étage filtrant basse fréquence des poulies découpleuses de vilebrequin a une raideur typiquement dans la plage 3 à 6 Nm/°.

Les fréquences de résonances du système comprenant la poulie de vilebrequin et l'inertie globale entraînée I sont comprises dans la plage 12 Hz - 18 Hz.

Les couples mécaniques prélevés par tous les organes récepteurs (accessoires) peuvent atteindre des valeurs comprises entre 40 et 100 Nm, parfois plus.

Les inconvénients suivants sont associés aux poulies de vilebrequin de l'art antérieur :

-    lors du passage par la fréquence de résonance (au démarrage ou à l'arrêt), les amplitudes de débattement sont très élevées, et sont transmises à la courroie qui peut glisser, sauter et/ou faire du bruit. Les autres éléments entraînés par la courroie sont aussi fortement sollicités.

- à cause de ces grands débattements, certaines poulies découpleuses de vilebrequin ont des butées qui empêchent l'élément résilient de dépasser une certaine amplitude, afin de le préserver. Lorsque ces butées entrent en fonction, il y a souvent du bruit (choc mécanique).

Afin d'être plus efficace en découplage basse fréquence, la raideur est la plus faible possible, compte tenu de la relation (2) ci-dessus, et sous l'effet du couple prélevé par le ou les accessoires, l'angle statique de déformation de l'élément élastique est très élevé.

Il s'ensuit un compromis délicat à trouver pour choisir le débattement autorisé par les butées qui est forcément réduit pour des raisons de résistance de l'élastomère, et qui doit être suffisamment important pour tenir compte de l'angle de déformation statique.

Il faut aussi tenir compte du fluage au cours du temps, qui fait se rapprocher la position moyenne de l'une des butées.

Dans certains cas, le moteur comporte dans sa partie arrière (côté boîte de vitesse) un volant double masse amortisseur (encore appelé DVA pour "double volant amortisseur, DMF pour "double mass fly wheel), solidaire du vilebrequin, et qui a pour but de filtrer les vibrations de torsion à l'entrée de la boîte de vitesse.

Ce volant amortisseur crée un mode de résonance à des fréquences basses (en deçà du régime de ralenti), de sorte qu'il est fréquent que les résonances du volant DVA et de la transmission par courroie se chevauchent ou soient très proches.

Dans ce cas, les énergies vibratoires sont très importantes et le volant DVA contribue à dégrader le niveau vibratoire dans la transmission par courroie, à travers la poulie découpleuse du vilebrequin. C'est au démarrage que ce risque est le plus élevé.

Les solutions de l'art antérieur consistent à titre de compromis soit à recourir au niveau de la courroie à un tendeur hydraulique amorti qui impose des niveaux de tension importants et réduit les battements de courroie, soit à monter une poulie à roue libre sur l'alternateur, d'où la nécessité de prévoir un dispositif supplémentaire, ce qui augmente les coûts.

La présente invention a pour objet une poulie de vilebrequin ne présentant pas au moins une des inconvénients énumérés ci-dessus.

L'invention concerne ainsi une poulie de vilebrequin comprenant un élément interne menant et un élément externe mené ayant un contour externe nervuré adapté à recevoir une courroie nervurée et un élément élastique interposé entre l'élément interne menant et l'élément externe mené caractérisé en ce qu'elle comporte un dispositif de couplage unidirectionnel assurant un couplage entre l'élément interne menant et l'élément externe mené dans le sens moteur et un découplage dans l'autre sens, le dispositif de couplage étant disposé en série avec l'élément élastique entre l'élément interne menant et l'élément externe mené.

On améliore ainsi le découplage basse fréquence que procure la poulie.

Le dispositif de couplage unidirectionnel peut être du type à billes, à aiguilles ou à cames, ou bien encore du type à ressort à expansion radiale. L'élément élastique peut comporter au moins une pièce en élastomère. Il peut être également un ressort de torsion ou un ressort spirale.

L'invention concerne également un système de transmission par courroie comprenant une telle poulie de vilebrequin.

D'autres caractéristiques et avantages de l'invention apparaîtront mieux à la lecture de la description qui va suivre, donnée à titre d'exemple non limitatif, en liaison avec les dessins dans lesquels :

- la figure 1 illustre une poulie de vilebrequin de l'art antérieur.
- la figure 2 illustre la réponse d'un système de transmission entraînée par une poulie de vilebrequin.
- les figures 3 et 4 représentent en coupe longitudinale deux modes de réalisation de l'invention.
- la figure 5 illustre deux variantes de l'invention sous forme de deux demi coupes longitudinales.

A la figure 1, une poulie de vilebrequin connue comporte un élément interne menant 1 qui peut être solidarisé à un vilebrequin par une vis 61 et un élément externe mené 3 présentant une couronne 31 ayant un contour externe 32 nervuré pour recevoir une courroie de transmission. Le découplage basse fréquence est obtenu par une couronne en élastomère 2' adhérisée à deux faces $1_1$ et $3_1$ respectivement de l'élément menant 1 et de l'élément mené 3.

Un amortisseur de vibrations de torsion haute fréquence AVT est logé dans une cavité de l'élément externe 3 et il comporte un anneau élastomère 71 solidaire d'une part d'un prolongement cylindrique 73 d'un flanc 72 d'une pièce 7 solidaire en rotation de l'élément interne 1 et du vilebrequin et d'autre part d'une masselotte 74 en forme de couronne. Cet amortisseur de vibration a pour fonction de d'absorber les vibrations de torsion hautes fréquences propres au vilebrequin, en général dans la gamme 200 à 300 Hz.

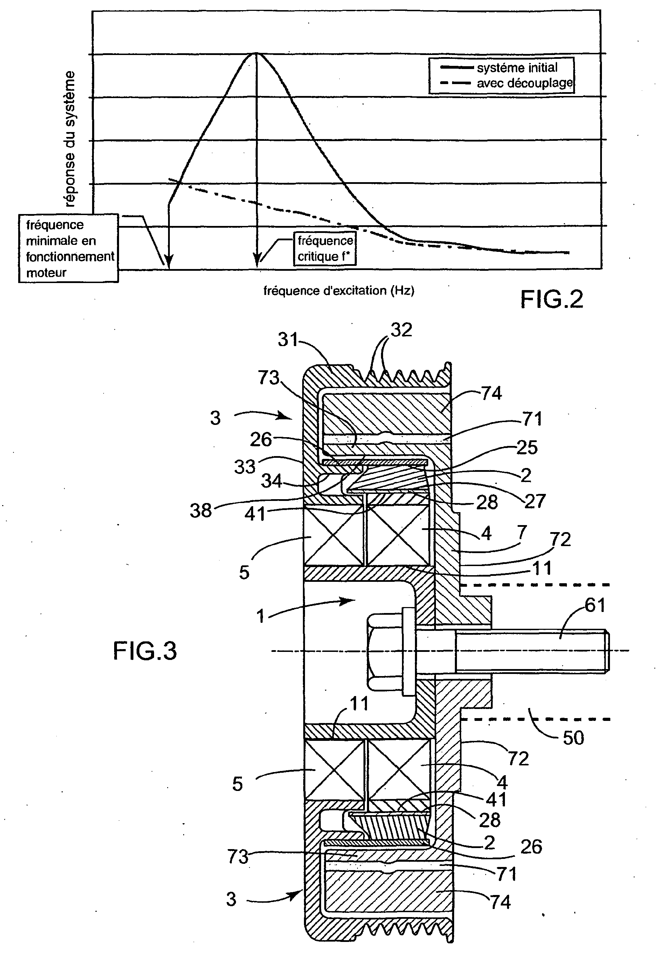

La figure 2 illustre schématiquement la réponse en fréquence d'un système de transmission d'inertie totale I

entraîné par une poulie d'alternateur. Il existe une fréquence critique f* pour laquelle la réponse du système est maximale, et qui est en général une des fréquences propres du système, notamment dans la plage 12 à 18 Hz.

Selon la figure 3 où les éléments homologues ont été désignés par le même repère, la poulie découpleuse présente un élément interne menant 1 solidarisé à un vilebrequin 50 par une vis 61 et un élément externe mené 3. Cet élément 3 présente la couronne 31 ayant ledit contour externe 32 nervuré de manière à recevoir une courroie nervurée de transmission de puissance aux accessoires (alternateur et/ou pompe à eau et/ou climatisation et/ou direction assistée, etc...)

L'élément externe 3 présente également un flanc 33 qui est pourvu d'un premier prolongement cylindrique 34 solidaire d'un élément annulaire 2 en élastomère. L'élément 2 en élastomère est adhérisé d'une part, à sa face cylindrique externe 25 à une première pièce cylindrique rigide 26 fixée par collage ou soudure au prolongement 34 et d'autre part, à sa face cylindrique interne 27 à une deuxième pièce cylindrique rigide 28. Celle-ci est à son tour solidaire par collage ou soudure du contour externe 41 d'un dispositif 4, ici une roue libre à came, à billes ou à rouleaux, ou bien en variante, un dispositif de type ressort à expansion radiale qui, en se déformant par torsion, gonfle et se plaque vers l'extérieur d'une cavité et établit une liaison de transmission avec la pièce 28.

Le dispositif 4 a pour fonction de connecter l'élément interne menant 1 à l'élément externe mené 3 dans le sens moteur de l'élément 1 et de le déconnecter dans l'autre sens.

Le dispositif 4 est monté sur le contour externe cylindrique 11 de l'élément interne menant 1.

Le dispositif 4 est disposé fonctionnellement en série avec l'élément 2 en élastomère pour former un étage filtrant basse fréquence, ce qui fait que le dispositif 4 pourrait, en variante, être disposé à l'extérieur de l'élément 2 en élastomère.

Un roulement 5, par exemple un roulement à billes ou à rouleaux, est disposé entre un deuxième prolongement cylindrique 36 du flanc 33 et le contour externe 11 de l'élément interne menant 1.

Le roulement 5 qui est disposé en parallèle avec l'ensemble constitué par l'élément élastique 2 et le dispositif de couplage 4 assure le guidage et la reprise de charge radiale de l'élément externe mené 3.

La poulie de vilebrequin peut également comporter de manière connue en soi un dispositif amortisseur de vibrations de torsion AVT, qui est par exemple logé dans une cavité 38 de l'élément externe 3 et qui a donc pour fonction d'absorber les vibrations de torsion hautes fréquences propres au vilebrequin, en général dans la gamme 200 à 300 Hz. Ce dispositif comporte comme à la Figure 1 un anneau élastomère 71 solidaire d'une part d'un prolongement cylindrique 73 du flanc 72 d'une pièce 7 solidaire en rotation de l'élément interne 1 et du vilebrequin et d'autre part, d'une masselotte en forme de couronne 74.

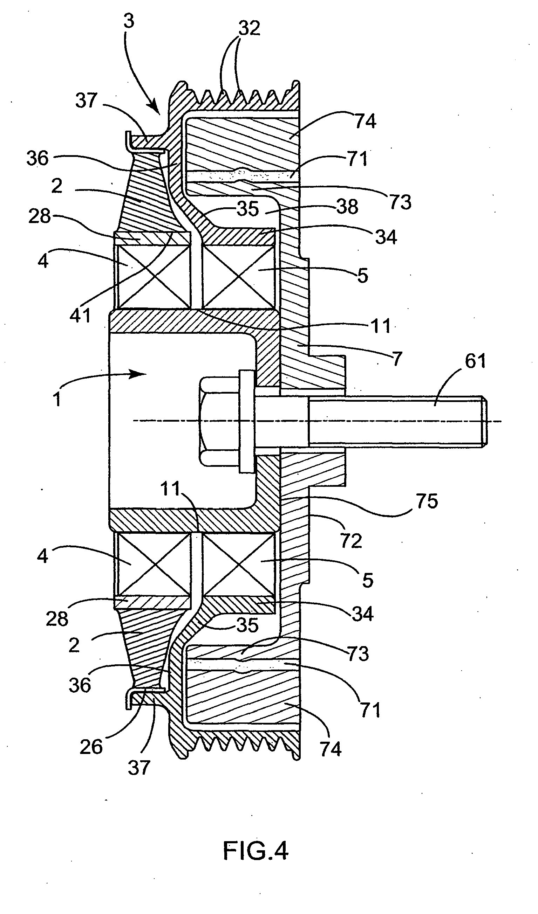

A la figure 4, les éléments homologues ont été désignés par le même repère. Le roulement 5 est monté sur un prolongement cylindrique 34 raccordé par un secteur tronconique 35 au flanc 36 de l'élément mené 3. Un prolongement cylindrique 37 de ce flanc 36, dirigé vers l'extérieur porte la pièce externe 26 de l'élément élastique 2 qui présente en coupe une forme tronconique. Le dispositif 4 (roue libre ou ressort à expansion radiale) est disposé en série avec l'élément élastique 2. Le roulement 5 est disposé entre le dispositif 4 et le flanc 75 de la pièce 7 et il est en vis-à-vis des nervurages du contour externe 32.

Avec un roulement 5 disposé en vis-à-vis des nervurages 32 du contour externe 31, la reprise de charge radiale s'effectue du côté du vilebrequin et sans aucun porte-à-faux.

L'élément élastique 2 peut être également un ressort, comme illustré à la figure 5, sous la forme d'un ressort de torsion 21 ou d'un ressort spirale 22. Dans le mode de réalisation représenté, le ressort 21 ou 22 est logé dans la cavité 38. Un de ses extrémités est fixée de manière solidaire à l'élément menant 1 alors que son autre extrémité est fixée de manière solidaire à l'élément mené 3.

Le fonctionnement du dispositif selon l'invention peut être décrit comme suit :

Lorsque le moteur accélère, le couple produit par cette accélération est transmis au dispositif 4.
Ce dispositif est :

- soit une roue libre à cames, galets ou billes ;
- soit un système de type ressort à expansion radiale, qui en se tordant, gonfle et se plaque contre la cavité et établit une liaison adhérente ;
- et plus généralement tout système qui connecte dans le sens accélération moteur et déconnecte dans le sens décélération moteur.

A ce moment, l'embrayage est verrouillé et transmet l'accélération de la partie interne 1 vers la partie externe 3, par l'intermédiaire de l'élément élastique 2. La partie externe le transmet à la courroie grâce à la région nervurée 32.

Ensuite, la courroie transmet ce mouvement à un ou plusieurs organes récepteurs (accessoires tels qu'alternateurs, pompe à eau, climatisation, et/ou direction assistée, etc...).

Une fois que ces organes sont mis en mouvement, toute décélération du vilebrequin 5 a pour conséquence de déverrouiller le dispositif d'embrayage 4 (roue libre ou ressort à expansion radiale qui en se contractant libère le mouvement relatif).

La partie externe menée 3 de la poulie peut alors continuer à tourner librement selon sa vitesse propre, tandis que sa partie interne menante 1 (toujours solidaire du vilebrequin) peut librement décélérer.

Ainsi, le mouvement de la courroie n'est pas (ou peu) modifié par la décélération du vilebrequin 5.

Il en sera ainsi à chaque alternance d'accélérations et décélérations du vilebrequin, qu'elles soient rapides (phénomène d'acyclisme bien connu dans les moteurs thermiques à combustion interne), ou lorsque le moteur diminue progressivement sa vitesse.

L'invention présente également les avantages suivants :

- autoriser le débrayage ou la mise en roue libre de l'inertie entraînée (ici, il s'agit de l'ensemble de la cinématique), et donc de ne pas lui communiquer toute l'oscillation ;
- supprimer le phénomène de résonance, par cette mise en roue libre, au moment où la fréquence d'excitation coïncide avec la pseudo fréquence de résonance de la poulie sans roue libre ;
- réduire l'amplitude de déformation de l'élément élastique, et donc préserver des dégradations de type fatigue ;
- ne communiquer dans le système de transmission qu'une partie de la vibration générée par le moteur thermique, et donc réduire à la source, l'amplitude des nuisances que subit la transmission, ce qui est très intéressant notamment dans le cas où le moteur comporte un volant double masse amortisseur.

L'un des intérêts de l'invention réside dans l'écrêtage du phénomène de résonance, par mise en roue libre sur une partie de l'oscillation.

Quant la poulie de vilebrequin de l'art antérieur entretenait sa propre résonance, et sa destruction, la poulie selon l'invention écrête la résonance et se préserve grâce à la mise en roue libre.

Ainsi, la fréquence, de coupure fc de la poulie de vilebrequin peut ne pas respecter la relation (1) donnée plus haut.

L'invention permet d'être moins calé en fréquence et élargit le critère de position de la fréquence de résonance du découpleur.

Le fait d'intercaler un dispositif de couplage unidirectionnel en série avec l'élément élastique permet, sans que ce soit obligatoire, de choisir la raideur k de cet élément élastique plus élevée que selon l'art antérieur.

Il en résulte que, sous l'effet du couple résistant, les taux de déformation que subit l'élément élastique sont dans ce cas plus faibles, et sa durabilité est augmentée.

Bien entendu, la capacité d'écrêtage de la roue libre est limitée. En particulier, si le couple résistant du ou des organes entraînés se superpose au couple dynamique, la mise en roue libre est moins fréquente, et seule une partie des oscillations est écrêtée.

Il n'est donc pas souhaitable d'avoir une raideur k trop élevée, sinon on tomberait dans les inconvénients des poulies roue libre de l'art antérieur.

Un bon compromis entre ces deux situations est de fixer la nouvelle limite maxi pour fc que que :

$$fc \leq 2\ f^*$$

et de préférence

$$fc \leq 1{,}5\ f^*.$$

Ainsi, la raideur selon l'invention est telle que :

$$k \leq 8\pi^2 (f^*)^2\ I$$

et de préférence :

$$k \leq 4{,}5\pi^2 (f^*)^2\ I$$

L'invention permet en particulier de choisir une raideur k supérieure à $2\ \pi^2 (f^*)^2\ I$, ce qui n'était pas possible avec les poulies de l'art antérieur. Mais il reste bien entendu possible de choisir une raideur inférieure

ou égale à cette valeur, et l'invention élargit donc vers les valeurs supérieures la gamme de valeurs de k qui peut être mise en oeuvre.

La valeur de la raideur k peut être comprise entre 0,5 Nm/$^0$ et 500 Nm/$^0$, 0,5 N/m$^0$ correspondant à une cinématique de moteur automobile comportant pour seul accessoire un alternateur avec une résonance calée à f* = 15 Hz et 500 N/m$^0$ à un poids lourd présentant une cinématique à plusieurs accessoires (alternateur, compresseur, visco coupleur, pompe à eau et direction assistée) avec une résonance calée à f* = 40 Hz.

**Revendications**

1. Poulie de vilebrequin destiné à un système de transmission entraînant une cinématique présentant une inertie totale I, le système de transmission ayant une fréquence critique f*, la poulie comprenant un élément interne menant (1) et un élément externe mené (3) ayant un contour externe nervuré (32) adapté à recevoir une courroie nervurée et un élément élastique (2) ayant une raideur k **caractérisée en ce que** cet élément élastique est interposé entre l'élément interne menant (1) et l'élément externe (3) mené et **en ce que** la poulie comporte un dispositif de couplage unidirectionnel (4) assurant un couplage entre l'élément interne menant (1) et l'élément externe mené (3) dans le sens moteur et un découplage dans l'autre sens, le dispositif de couplage (4) étant disposé en série avec l'élément élastique (2) entre l'élément interne menant (1) et l'élément externe mené (3), et **en ce que** $k \leq 8\pi^2(f^*)^2 I$ et $k > 2\pi^2(f^*)^2 I$.

2. Poulie selon la revendication 1, **caractérisée en ce que** le dispositif de couplage unidirectionnel (4) est du type à billes, à aiguilles ou à cames.

3. Poulie selon la revendication 1, **caractérisée en ce que** le dispositif de couplage unidirectionnel (4) est un dispositif de type à ressort à expansion radiale.

4. Poulie selon une des revendications précédentes, **caractérisée en ce que** l'élément élastique (2) comporte au moins une pièce en élastomère.

5. Poulie selon une des revendications 1 à 3, **caractérisée en ce que** l'élément élastique (2) est un ressort de torsion (21), ou un ressort spirale (22).

6. Poulie selon une des revendications précédentes, **caractérisée en ce qu'**elle comporte un roulement (5) interposé entre l'élément interne menant (1) et l'élément externe mené (3) et qui est disposé en parallèle avec l'ensemble constitué par l'élément élastique (2) et le dispositif de couplage (4).

7. Poulie selon une des revendications précédentes, **caractérisée en ce qu'**elle comporte également un dispositif (71, 74) amortisseur de vibrations solidaire en rotation de l'élément interne (1), et qui est apte à découpler les vibrations de torsion propres au vilebrequin.

8. Poulie selon une des revendications précédentes, **caractérisée en ce que** :

$$k \leq 4,5\pi^2(f^*)^2 I.$$

9. Système de transmission par courroie, **caractérisé en ce qu'**il comporte une poulie de vilebrequin selon une des revendications précédentes.

**Claims**

1. Crankshaft pulley intended for a transmission system driving a kinematic apparatus having a total inertia I, the transmission system having a critical frequency f*, the pulley comprising an internal drive element (1) and an external driven element (3) having a ribbed outer contour (32) adapted to receive a ribbed belt and an elastic element (2) having a rigidity k, **characterised in that** this elastic element is interposed between the internal drive element (1) and the external driven element (3) and **in that** the pulley comprises a unidirectional coupling device (4) providing a coupling between the internal drive element (1) and the external driven element (3) in the driving direction and an uncoupling in the other direction, the coupling device (4) being arranged in series with the elastic element (2) between the internal drive element (1) and the external driven element (3), and **in that** $k \leq 8\pi^2(f^*)^2I$ and $k > 2\pi^2(f^*)^2I$.

2. Pulley according to claim 1, **characterised in that** the unidirectional coupling device (4) is of the type having ball bearings, needle bearings or cams.

3. Pulley according to claim 1, **characterised in that** the unidirectional coupling device (4) is a device of the radial expansion spring type.

4. Pulley according to one of the preceding claims, **characterised in that** the elastic element (2) comprises at least one elastomeric part.

5. Pulley according to one of claims 1 to 3, **characterised in that** the elastic element (2) is a torsion spring (21) or a helical spring (22).

6. Pulley according to one of the preceding claims, **characterised in that** it comprises a roller bearing (5) interposed between the internal drive element (1) and the external driven element (3) and arranged in parallel with the assembly consisting of the elastic element (2) and the coupling device (4).

7. Pulley according to one of the preceding claims, **characterised in that** it also comprises a vibration muffling device (71, 74) which is connected for rotation with the internal element (1) and which is adapted to uncouple the torsional vibrations associated with the crankshaft.

8. Pulley according to one of the preceding claims, **characterised in that**:

$$k \leq 4.5\pi^2(f^*)^2I \ .$$

9. Belt transmission system, **characterised in that** it comprises a crankshaft pulley according to one of the preceding claims.

**Patentansprüche**

1. Scheibe einer Kurbelwelle für eine Antriebsvorrichtung, die eine Kinematik antreibt, die eine Gesamtträgheit I aufweist, wobei die Antriebsvorrichtung eine kritische Frequenz f* hat, wobei die Scheibe aufweist: ein treibendes Innenelement (1) und ein getriebenes Außenelement (3), das eine gerippte Außenkontur (32) hat, die angepasst ist, einen gerippten Riemen aufzunehmen, und ein elastisches Element (2) mit einer Starrheit k, **dadurch gekennzeichnet, dass** das elastische Element zwischen das treibende Innenelement (1) und das getriebene Außenelement (3) zwischengefügt ist und dass die Scheibe eine in einer Richtung wirkende Kopplungseinrichtung (4) aufweist, die eine Kopplung zwischen dem treibenden Innenelement (1) und dem getriebenen Außenelement (3) in Antriebsrichtung und eine Entkopplung in die andere Richtung sicherstellt, wobei sich die Kopplungseinrichtung (4) in Reihe mit dem elastischen Element (2) zwischen dem treibenden Innenelement (1) und dem getriebenen Außenelement (3) befindet, und dass $k \leq 8\pi^2(f^*)^2I$ und $k > 2\pi^2(f^*)^2I$ ist.

2. Scheibe nach Anspruch 1, **dadurch gekennzeichnet, dass** die in einer Richtung wirkende Kopplungseinrichtung (4) vom Kugel-, Nadel- oder Nocken-Typ ist.

3. Scheibe nach Anspruch 1, **dadurch gekennzeichnet, dass** die in einer Richtung wirkende Kopplungseinrichtung (4) eine Vorrichtung vom Typ mit einer Radialausdehnungsfeder ist.

4. Scheibe nach einem der vorhergehenden Ansprüche, **dadurch gekennzeichnet, dass** das elastische Element (2) zumindest ein Elastomerteil aufweist.

5. Scheibe nach den Ansprüchen 1 bis 3, **dadurch gekennzeichnet, dass** das elastische Element (2) eine Torsionsfeder (21) oder eine Spiralfeder (22) ist.

6. Scheibe nach einem der vorhergehenden Ansprüche, **dadurch gekennzeichnet, dass** diese ein Wälzlager (5) aufweist, das zwischen das treibende Innenelement (1) und das getriebene Außenelement (3) zwischengefügt ist und das parallel zur Gruppe angeordnet ist, die durch das elastische Element (2) und die Kopplungseinrichtung (4) gebildet wird.

7. Scheibe nach einem der vorhergehenden Ansprüche, **dadurch gekennzeichnet, dass** diese ferner eine Vibrationsdämpfungseinrichtung (71, 74) aufweist, die mit dem Innenelement (1) rotationsfest verbunden ist und die geeignet ist, die Torsionseigenschwingungen von der Kurbelwelle zu entkoppeln.

8. Scheibe nach einem der vorhergehenden Ansprüche, **dadurch gekennzeichnet, dass** $k \leq 4{,}5\pi^2(f^*)^2 l$ ist.

9. Riemenantriebsvorrichtung, **dadurch gekennzeichnet, dass** diese eine Kurbelwellenscheibe nach einem der vorhergehenden Ansprüche aufweist.

FIG.1

FIG.5

FIG.2

légende:
— systéme initial
— — avec découplage

réponse du système

fréquence minimale en fonctionnement moteur

fréquence critique f*

fréquence d'excitation (Hz)

FIG.3

EP 1 977 143 B1

FIG.4

11

**EP 1 977 143 B1**

**RÉFÉRENCES CITÉES DANS LA DESCRIPTION**

**Documents brevets cités dans la description**

- EP 1619410 A

- WO 2004070225 A